# EUROPEAN PATENT APPLICATION

(11) **EP 2 196 672 A1**
(43) Date of publication of application: **16.06.2010**
(21) Application number: 08833576.5
(22) Date of filing: 25.09.2008
(51) Int. Cl.: F04B 39/00

(54) **ELECTRICALLY DRIVEN COMPRESSOR USED FOR VEHICLE**

(30) Priority: 28.09.2007 JP 2007255277
(71) Applicant: Mitsubishi Heavy Industries, Ltd., Tokyo 108-8215 (JP)
(72) Inventor: ICHISE, Yuki, Kiyosu-shi Aichi 452-8561 (JP); WATANABE, Takayuki, Kiyosu-shi Aichi 452-8561 (JP); SUZUKI, Manabu, Kiyosu-shi Aichi 452-8561 (JP); YOGO, Ichiro, Kiyosu-shi Aichi 452-8561 (JP); ARASHI, Noriaki, Kiyosu-shi Aichi 452-8561 (JP)
(74) Representative: HOFFMANN EITLE
(86) International application number: PCT/JP2008/067324
(87) International publication number: WO 2009/041520

(57) **Abstract**

Provided is a vehicle electric compressor in which damage, such as damage to the function of an inverter unit or a high-voltage cable, is less likely to occur even when an external force is applied. A vehicle electric compressor (10) in which a compressing mechanism for compressing and discharging intake fluid and an electric motor for driving the compressing mechanism are accommodated in a housing (11), and an inverter unit (14) for rotational control of an electric motor is disposed on the outside of the housing (11), wherein a cover member (20) for protecting the inverter unit (14) from an external force is provided on the outside of the inverter unit (14).

## Description

### Technical Field

The present invention relates to a vehicle electric compressor used for a vehicle air conditioner.

### Background Art

With conventional vehicles, such as cars, vehicle air conditioners are widely used for providing a comfortable interior environment for vehicle cabins by performing air conditioning. Such vehicle air conditioners require compressors for circulating refrigerants.
Recently, electric cars and hybrid cars have been developed, and inverter-controlled vehicle electric compressors are used for the vehicle air conditioners provided in such vehicles.

Some vehicle electric compressors using inverter control are configured such that a scroll compressing mechanism and an electric motor are accommodated in a housing, and an inverter unit for rotational control of the electric motor is disposed outside the hosing. With such a vehicle electric compressor, in order to enhance cooling efficiency and to reduce the size of an inverter circuit, a technique in which heat-generating components of the inverter circuit are separately placed at corner spaces in a circuit case in such a manner as to cover an end of the housing has been proposed (for example, see Patent Document 1).
In addition, with the electric compressors used for vehicle air conditioners, in order to protect a motor driving circuit from an externally applied impact, a technique for disposing the motor driving circuit at a portion opposing an object to be attached in a compressor housing is disclosed (for example, see Patent Document 2).
Patent Document 1: Japanese Unexamined Patent Application, Publication No. 2006-274971 (see Figs. 1 and 2)
Patent Document 2: The Publication of Japanese Patent No. 3804589 (see Fig. 3)

### Disclosure of Invention

With a vehicle electric compressor installed in a vehicle air conditioner, because an inverter unit is integrally formed therewith, and fuses are not provided in the vehicle or in the compressor, when an external force is applied in the event of, for example, a vehicle collision, the function of the inverter unit may be damaged due to damage to, for example, inverter components or high-voltage cables, which is undesirable.
The present invention has been conceived in light of the circumstances described above, and an object thereof is to provide a vehicle electric compressor in which an inverter unit and a high-voltage cable are less likely to be damaged even when an external force is applied.

To solve the problems described above, the present invention employs the following solutions.
A first aspect of a vehicle electric compressor according to the present invention is a vehicle electric compressor in which a compressing mechanism for compressing and discharging intake fluid and an electric motor for driving the compressing mechanism are accommodated in a housing, and an inverter unit for rotational control of the electric motor is disposed on the outside of the housing, wherein a cover member for protecting the inverter unit from an external force is provided on the outside of the inverter unit.

According to such a vehicle electric compressor, because the cover member for protecting the inverter unit from the external force is provided on the outside of the inverter unit, the inverter unit can be protected from an external force applied when, for example, a vehicle collision occurs, thus preventing damage.

In the first aspect described above, the cover member preferably has a protection portion for a high-voltage cable that is connected to the inverter unit. Accordingly, the high-voltage cable can be protected from an external force applied when, for example, a vehicle collision occurs, thus preventing cable breakage.

A vehicle electric compressor according to a second aspect of the present invention is a vehicle electric compressor in which a compressing mechanism for compressing and discharging intake fluid and an electric motor for driving the compressing mechanism are accommodated in a housing, and an inverter unit for rotational control of the electric motor is disposed on the outside of the housing, wherein a leg protruding from the housing is provided for secure mounting, and a stress concentration portion is provided at a boss at an end of the leg.

According to such a vehicle electric compressor, because the leg protruding from the housing is provided for secure mounting, and the stress concentration portion is provided at the boss at the end of the leg, if an external force is applied when, for example, a vehicle collision occurs, the stress concentration portion of the boss can be made to break before the base of the leg protruding from the housing.

According to the present invention described above, because the cover member for protecting the inverter unit from an external force is provided, the inverter unit can be protected from an external force applied when, for example, a vehicle collision occurs, thus preventing damage. In addition, by providing the protection portion of the high-voltage cable on the cover member, the high-voltage cable can be protected from an external force applied when, for example, a vehicle collision occurs, thus preventing cable breakage. Accordingly, even when an external force is applied in the event of, for example, a vehicle collision, it is possible to prevent the function of the inverter unit being degraded due to damage to, for example, the inverter unit or the high-voltage cable, or to prevent secondary damage due to, for example, the inverter unit or the high-voltage cable.

Furthermore, because the leg, which protrudes from the housing and which is used for secure mounting, is provided with the stress concentration portion at the boss at the end thereof, if an external force is applied when, for example, a vehicle collision occurs, the stress concentration portion of the boss can be made to break before the base of the leg protruding from the housing. Accordingly, when the leg disposed close to the inverter unit is broken at the base thereof, it is possible to reduce and prevent the risk of damage due to collision of the damaged leg with the inverter unit.
In this way, according to the present invention described above, even when an external force is applied, because damage, such as damage to the function of the inverter unit and the high-voltage cable, is less likely to occur, a notable advantage is afforded in that it is possible to provide a vehicle electric compressor with improved reliability.

### Brief Description of Drawings

[FIG. 1] Fig. 1 is a side view showing a first embodiment of a vehicle electric compressor according to the present invention.
[FIG. 2] Fig. 2 is a perspective view showing an external schematic example of a vehicle electric compressor.
[FIG. 3] Fig. 3 is a side view showing a modification of the vehicle electric compressor shown in Fig. 1.
[FIG. 4] Fig. 4 is a perspective view showing a stress concentration portion provided at a boss at an end of a leg, as a second embodiment of a vehicle electric compressor according to the present invention.
[FIG. 5] Fig. 5 is a perspective view showing a first modification of the stress concentration portion shown in Fig. 4.
[FIG. 6] Fig. 6 is a perspective view showing a second modification of the stress concentration portion shown in Fig. 4.

### Explanation of Reference Signs:

- 10:: vehicle electric compressor (compressor)
- 11:: housing
- 12:: compression unit
- 13:: motor unit
- 14:: inverter unit
- 15, 16, 17:: leg
- 20, 20A:: cover member
- 21:: cable protection portion
- 30:: high-voltage cable
- 40,: 40A, 40B: stress concentration portion
- 41:: through-hole
- 42:: notch
- 43:: step

### Best Mode for Carrying Out the Invention

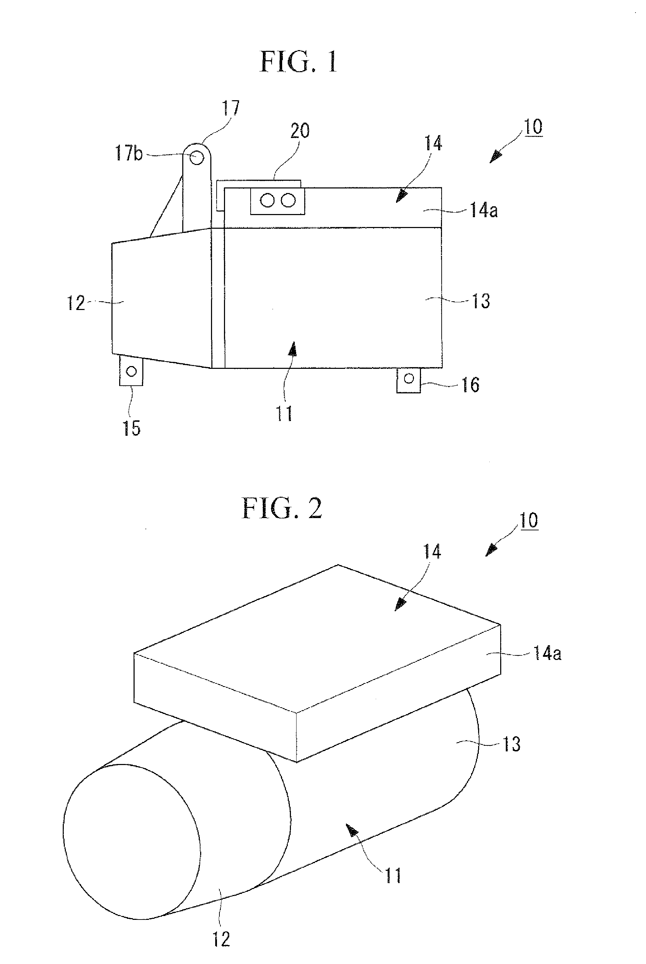

An embodiment of a vehicle electric compressor according to the present invention will be described below with reference to the drawings.
In a first embodiment shown in Figs. 1 and 2, a vehicle electric compressor (hereinafter, referred to as "compressor") 10, which is a horizontal sealed type, accommodates a compressing mechanism (not shown) and an electric motor (not shown) inside a housing 11. The compressing mechanism in this case is, for example, a scroll compressing mechanism; however, it is not particularly limited thereto. The compressor 10 shown in Fig. 2 illustrates the state before attaching a cover member 20 shown in Fig. 1.

The housing 11 is a hollow member formed by, for example, aluminum die-casting, in which a compression unit 12 accommodating the compressing mechanism and a motor unit 13 accommodating the electric motor are integrated.
In addition, an inverter unit 14 for rotational control of the electric motor is disposed in the housing 11. The inverter unit 14 accommodates components, such as a control board and a heat-generating component (not shown), in a storage casing 14a provided above the housing 11, in particular, above the motor unit 13 close to the electric motor. In addition, the storage casing 14a, formed by aluminum die-casting, is integrated with the housing 11, and a lid (not shown) is removably attached to an opening provided on an upper surface thereof.

In addition, legs 15, 16, and 17 for securing the compressor 10 at predetermined positions are provided on the housing 11 so as to protrude from the surfaces of the housing. In the example shown in the drawing, two legs 15 and 16 that are made to protrude at the lower surface side of the housing 11 at the front and rear thereof, and one leg 17 that is made to protrude at an adjacent position in front of the inverter unit 14 above the housing 11 are provided; however, it is not limited thereto.

The above-described compressor 10 has the cover member 20 that is provided on the outside of the inverter unit 14 to protect the inverter unit 14 from an external force. The cover member 20 is a member formed by bending, for example, a steel plate, and is attached in close contact with the entirety or substantially the entirety of the outer surface of the storage casing 14a with, for example, a bolt (not shown) in such a manner as to cover a corner peripheral of the front end side of the inverter unit 14 (compression unit 12 side).
In addition, the region for attaching the cover member 20 to protect the inverter unit 14 may be appropriately changed so as to minimize it from the viewpoint of, for example, weight reduction of the vehicle, considering the influence of external forces which vary according to the circumstances around the area where the compressor 10 is disposed (structure, placement of devices, etc.).

The cover member 20 shown in Fig. 1 is provided to cope with, for example, damage received by the inverter unit 14 due to interference with the leg 17 protruding at the compression unit 12 side.
In particular, because the cover member 20 is attached in close contact with the storage casing 14a, the mechanical characteristics of the materials of the storage casing 14a, formed by aluminum die-casting, and the cover member 20, formed of a steel plate, complement each other, making it possible to increase the strength against the external force. Accordingly, even when an external force generated in the event of, for example, a vehicle collision is received, it is possible to prevent damage by protecting the inverter unit 14 because the cover member 20 is attached. In other words, by attaching the cover member 20, it is possible to increase the strength of the inverter unit 14 against an external force; therefore, the reliability and the safety of the inverter unit 14 can be increased.

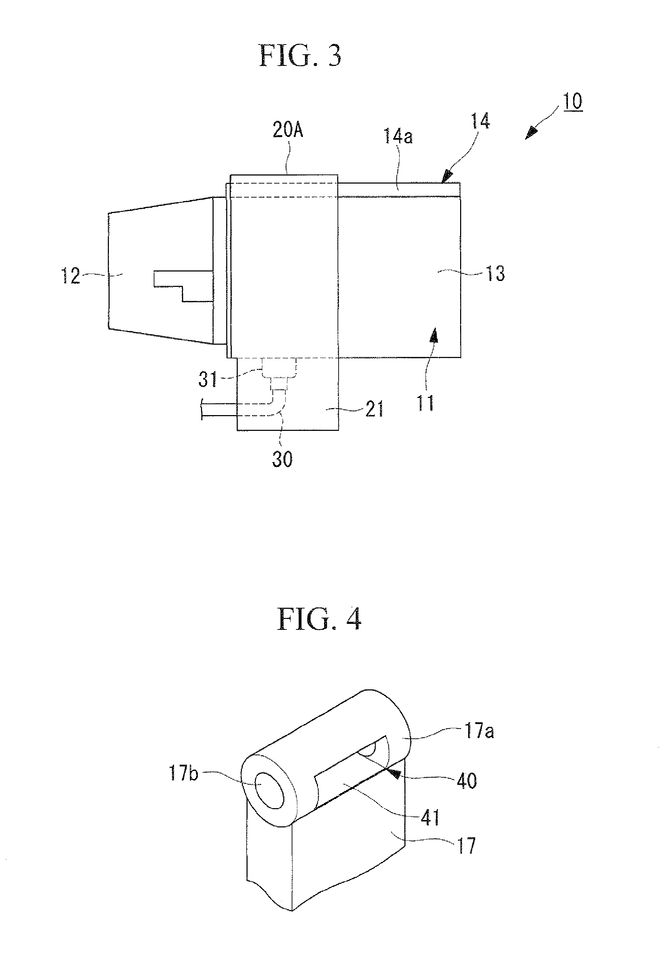

In addition, as a modification of the above-described cover member 20, for example, like a cover member 20A shown in Fig. 3, a cable protection portion 21 for protecting a high-voltage cable 30 connected to the inverter unit 14 from an external force may be provided. The cable protection portion 21 is provided such that the above-described cover member 20 is extended along either side of the housing 11 to surround the area around the high-voltage cable 30 connected at the bottom of the housing 11 and a connecting unit 31 thereof.

By employing the cover member 20A provided with such a cable protection portion 21, even when an external force generated in the event of, for example, a vehicle collision is received, the inverter unit 14 and the high-voltage cable 30 connected to the inverter unit 14 can be protected from the external force to prevent damage or breakage. In other words, by attaching the cover member 20A, it is possible to increase the strength of the inverter unit 14 against the external force, and moreover, to prevent the external force from directly acting on the high-voltage cable 30 and the connecting unit 31 by means of the cable protection portion 21. Accordingly, the reliability and the safety of the inverter unit 14 can be improved.

Next, a second embodiment of the present invention will be described based on Fig. 4.
In this embodiment, for example, a stress concentration portion 40 is provided at a boss 17a at an end of the leg 17 used for secure mounting. The boss 17a in this case is a portion in which is formed a through-hole 17b through which passes a rod-shaped supporting member (not shown), such as a bolt or a pin, for securing the compressor 10 to a predetermined position of a vehicle body.

The stress concentration portion 40 shown in Fig. 4 is provided, at an appropriate position of the boss 17a, with a through-hole 41 reaching the through-hole 17b. With such a stress concentration portion 40, when the external force is applied to the compressor 10, the boss 17a is made to break first before the base of the leg 17. More specifically, when the external force is applied to the compressor 10, before the base of the leg 17 is broken and separated from the housing 11, the boss 17a, provided with the stress concentration portion 40 to reduce the breaking strength, is broken and released from being securely supported by the rod-shaped supporting member. In other words, in the compressor 10 that receives the external force, because the boss 17a provided with the stress concentration portion 40 is broken before the base is broken and is released from being securely supported, the leg 17 moves together with the compressor 10 and the inverter unit 14; therefore, it is possible to prevent the leg 17, which is broken first, from colliding with the inverter unit 14 and causing damage.

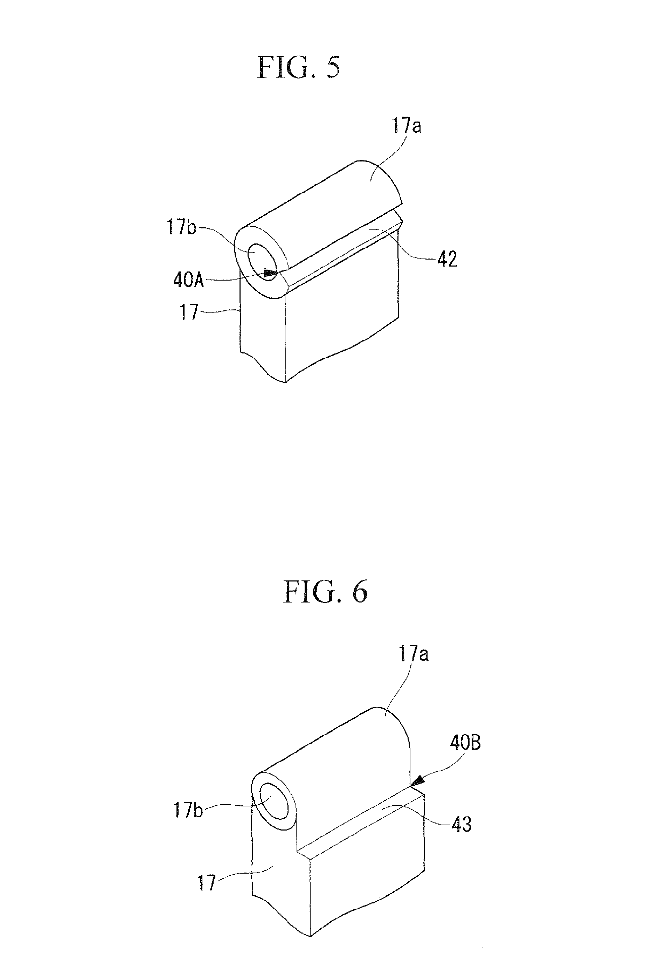

In addition to the through-hole 41 provided in the boss 17a, the modifications described below can be applied to the above-described stress concentration portion 40.
A stress concentration portion 40A of a first modification shown in Fig. 5 has a notch 42 in an axial direction in an outer circumferential surface of the boss 17a. As a result, because a thin-walled portion is formed in the boss 17a by the notch 42, stress concentration of the external force occurs at the notch 42, resulting in the notch 42 being easily broken.
A stress concentration portion 40B of a second modification shown in Fig. 6 has a step 43 formed by cutting out the boss 17a to form a thin-walled portion where stress concentration occurs.

In this way, the through-hole 41 is formed in the boss 17a at the end of the leg 17 that is used for secure mounting and that protrudes from the housing 11, or the stress concentration portions 40, 40A, and 40B in which the thin-walled portion is formed by the notch 42 or the step 43 are provided. Accordingly, when an external force is applied in the event of, for example, a vehicle collision, it is possible to break the stress concentration portions 40, 40A, and 40B of the boss 17a before the base of the leg 17 protruding from the housing 11 is broken.
The above-described stress concentration portions 40, 40A, and 40B are not limited to the leg 17; they are also applied to the legs 15 and 16 provided below the housing 11.
Furthermore, regarding the formation of the stress concentration portions 40, 40A, and 40B, in addition to the modifications shown in the drawings, various modifications are possible, such as a combination of the through-hole and the thin-walled portion.

In this way, by providing the cover member 20 for protecting the inverter unit 14 from an external force, the inverter unit 14 can be protected from an external force applied when, for example, a vehicle collision occurs, thus preventing damage. In addition, when using the cover member 20A provided with the protection portion 21 for the high-voltage cable 30, the high-voltage cable 30 can be protected from an external force applied when, for example, a vehicle collision occurs, thus preventing cable breakage.
Accordingly, even when an external force is applied in the event of, for example, a vehicle collision, it is possible to prevent the function of the inverter unit being degraded due to damage to, for example, the inverter unit 14 or the high-voltage cable 30, or to prevent secondary damage due to damage to, for example, the inverter unit 14 or the high-voltage cable 30.

Moreover, because the leg 17 or the like, which protrudes from the housing 11 and which is used for secure mounting, is provided with the stress concentration portion 40, 40A, or 40B at the boss 17a at the end portion side, if an external force is applied when, for example, a vehicle collision occurs, the stress concentration portion 40, 40A, or 40B of the boss 17a can be made to break before the base of the leg 17 protruding from the housing 11. Accordingly, when the leg 17 disposed close to the inverter unit 14 is broken at the base thereof, it is possible to reduce and prevent the risk of damage due to a collision of the damaged leg 17 with the inverter unit 14.
The present invention is not restricted to the embodiment described above. Suitable modifications can be made so long as they do not depart from the spirit of the present invention.

## Claims

1. A vehicle electric compressor in which a compressing mechanism for compressing and discharging intake fluid and an electric motor for driving the compressing mechanism are accommodated in a housing, and an inverter unit for rotational control of the electric motor is disposed on the outside of the housing, wherein
a cover member for protecting the inverter unit from an external force is provided on the outside of the inverter unit.

2. A vehicle electric compressor according to Claim 1, wherein the cover member has a protection portion for a high-voltage cable that is connected to the inverter unit.

3. A vehicle electric compressor in which a compressing mechanism for compressing and discharging intake fluid and an electric motor for driving the compressing mechanism are accommodated in a housing, and an inverter unit for rotational control of the electric motor is disposed on the outside of the housing, wherein
a leg protruding from the housing is provided for secure mounting, and a stress concentration portion is provided at a boss at an end of the leg.
